# EUROPEAN PATENT SPECIFICATION

(11) **EP 3 325 814 B1**
(45) Date of publication and mention of the grant of the patent: **04.11.2020**
(21) Application number: 16757070.4
(22) Date of filing: 11.07.2016
(51) Int. Cl.: F04D 29/42, F01P 5/10, F04D 15/00, F16K 1/24, F01P 7/14, F16K 5/04, F16K 5/10, F16K 5/12

(54) **VALVE ASSEMBLY FOR A PUMP WITH IMPROVED REGULATION OF THE PASSAGE OF COOLING LIQUID**
VENTILANORDNUNG FÜR EINE PUMPE MIT VERBESSERTER REGELUNG DES DURCHGANGS VON KÜHLFLÜSSIGKEIT
ENSEMBLE SOUPAPE POUR UNE POMPE DOTÉE D'UNE RÉGULATION AMÉLIORÉE DU PASSAGE DE LIQUIDE DE REFROIDISSEMENT

(30) Priority: 21.07.2015 IT UB20152363
(43) Date of publication of application: 30.05.2018
(73) Proprietor: Industrie Saleri Italo S.P.A., 25065 Lumezzane, Brescia (IT)
(72) Inventor: SURACE, Alfonso, 25065 Lumezzane (Brescia) (IT); PEDERSOLI, Marco, 25065 Lumezzane (Brescia) (IT)
(74) Representative: Gamba, Alessandro
(86) International application number: PCT/IB2016/054138
(87) International publication number: WO 2017/013525

(56) References cited:
- EP-A1- 1 744 086
- EP-A2- 0 335 090
- WO-A1-2014/068417
- WO-A1-2014/083441

## Description

This invention relates to a valve assembly for a pump of a cooling circuit, the pump of a cooling circuit that comprises said valve assembly and a pump of a cooling circuit in a further embodiment.

In particular, this invention is contextualised in the automotive sector, the pump being a component of the cooling system, preferably of vehicle engines, for example cars or motorcycles.

It is well known that the cooling pump, and the components that compose it, are the most important elements of a cooling circuit for heat engines, especially in vehicles. Thus, great attention is paid to the proper design of these components and the continuous improvement of their performance; an effective operating mode of the cooling system results in an improvement of the performance of the vehicle in its entirety and in particular of the internal combustion engine, such as for example the limitation or reduction of its polluting emissions.

In particular, research efforts aim at achieving an efficient cooling of the heat engine in all its phases of use; it is in fact preferable to achieve high cooling pushed in the presence of high operating temperatures and/or with engine at full speed, while it is not desirable, or only minimally desirable, that the engine is cooled in the initial working phases, for example immediately after ignition.

A plurality of patent documents are known in the name of the Applicant in which are described several solutions for valve assemblies or of cooling purrps in which it has addressed the problem of managing the quantity of cooling liquid circulating in the circuit: for example documents BS2012A000355, BS2014A000088, BS2015A000006, WO2014/068417 and WO2014/083441. A further similar valve assembly is known from AT 514 248 A2.

However, the main problem of the known valve assemblies is that of not having an effective and precise control of the flow of liquid.

Specifically, in fact, the known valve assemblies regul ate the obstruction, for example arranging itself in open, closed or partialised conditions by acting on the inlet or outlet mouths of the duct through which the cooling liquid flows, guiding the shutter in a frontal position, but distanced from said mouths, for example through suitable cam means.

The purpose of this invention is to provide a valve assembly, and a cooling purrp, suitable to solve this problem ensuring a predefined regulation of the flow of the cooling liquid.

This purpose is achieved by a valve assembly realised according to claim 1. This purposes is also achieved by a purrp, according to claim 5, comprising said valve assembly. The claims dependent on these describe variants of preferred embodiments having further advantageous aspects.

The characteristics and advantages of the valve assembly according to this invention will be apparent from the following description, given by way of non-limiting example, in accordance with the accorrpanyi ng figures, in wich:
- Figures 1a and 1b show a schematic example of a cooling purrp comprising a valve assembly in an open configuration and in a closed configuration;
- Figures 2a, 2b and 2c show a schematic example of a cooling purrp comprising a valve assembly according to this invention in, respectively, a first open configuration, a second open configuration and a closed configuration;

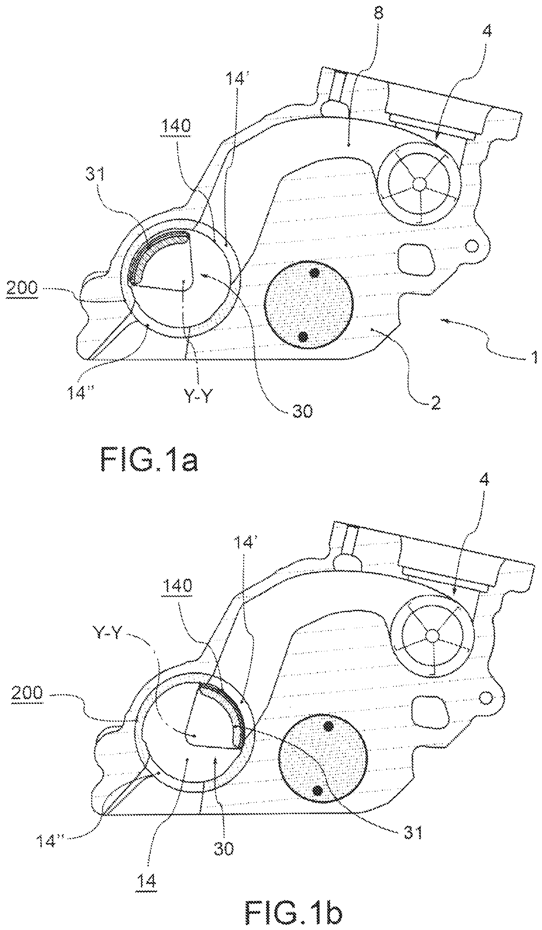

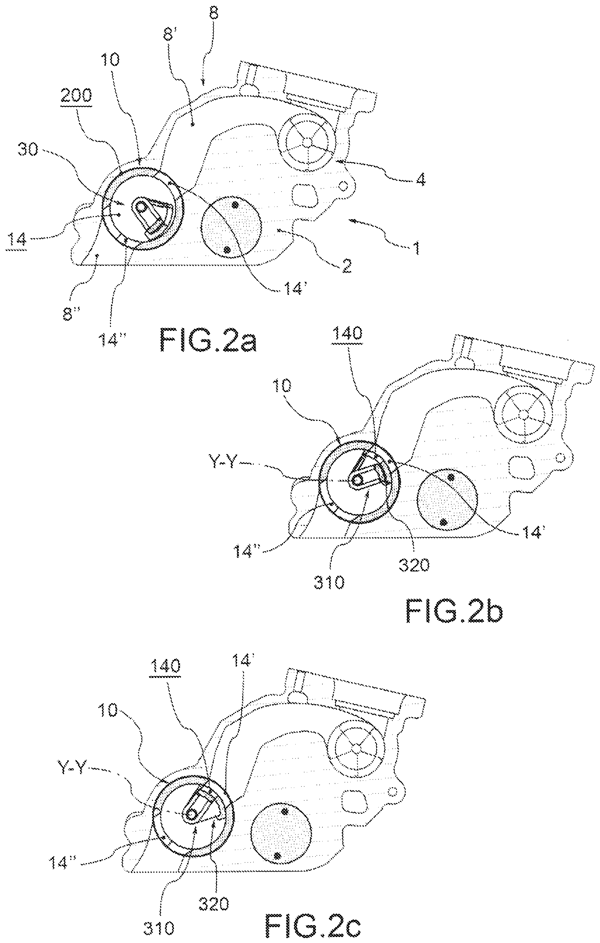

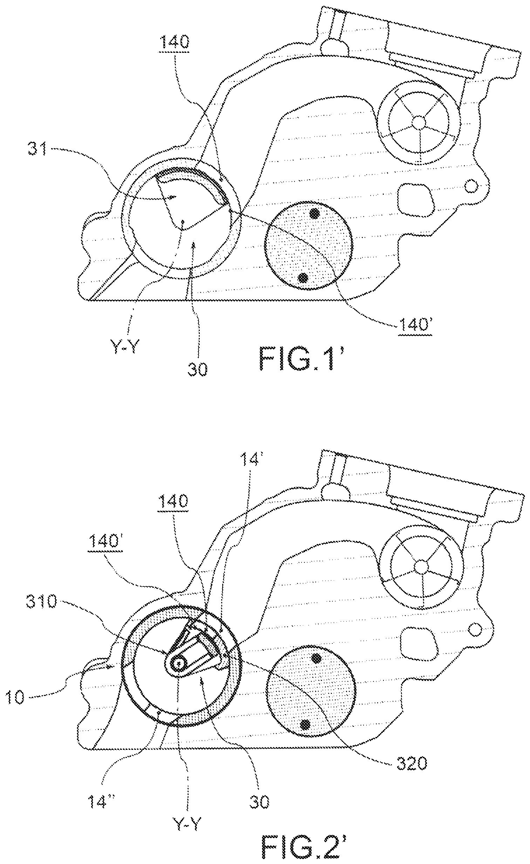

- Figures 1' and 2' respectively illustrate schematic examples of the cooling purrps shown in the above-mentioned Figures 1 and 2, in which they are placed in an intermediate configuration;

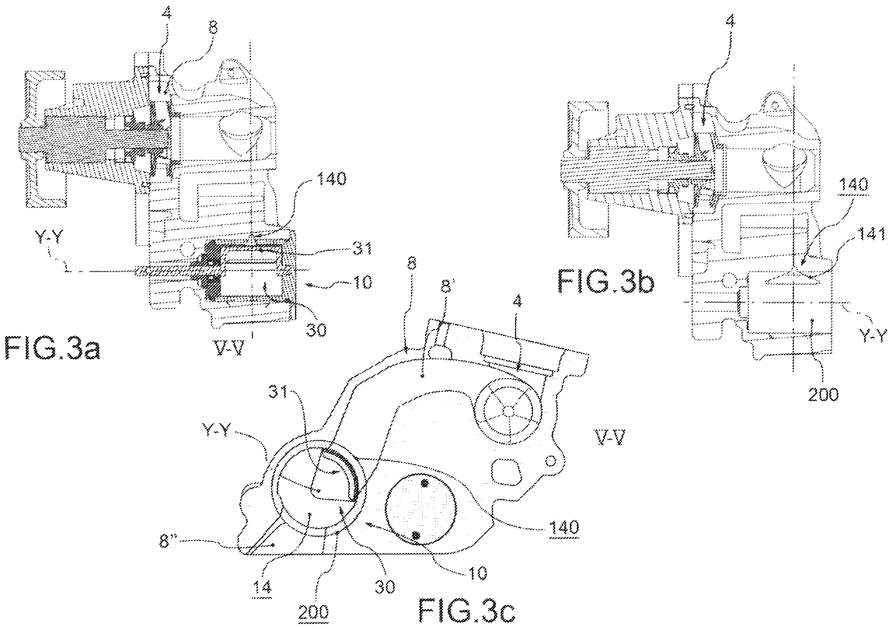

- Figures 3a and 3b represent a schematic section of a cooling pump with and without valve assembly;
- Figure 3c shows a cross section of the pump 3a along the sectional plane V-V.

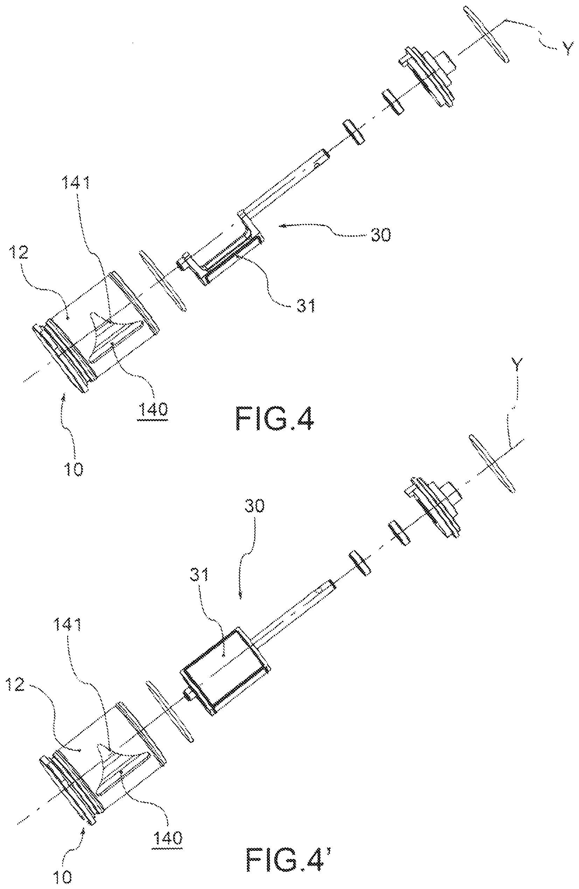

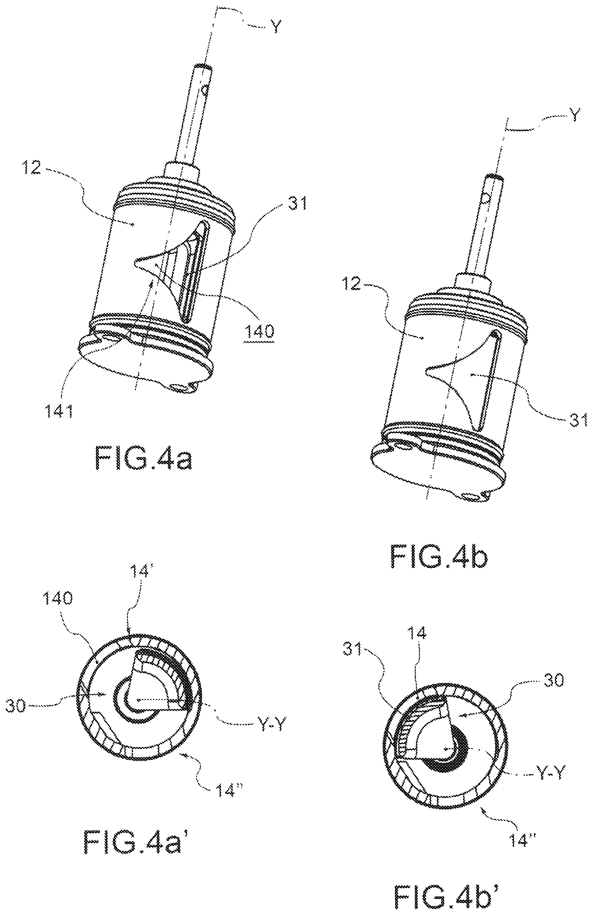

- Figures 4 and 4' show a view in separate parts of a valve assembly;
- Figures 4a and 4b represent two perspective views of the valve assembly according to the embodiment referred to in Figure 4 and 4', respectively, an open configuration and a closed configuration;
- Figures 4a' and 4b' illustrate two section views of the valve assembly shown in Figures 4a and 4b;

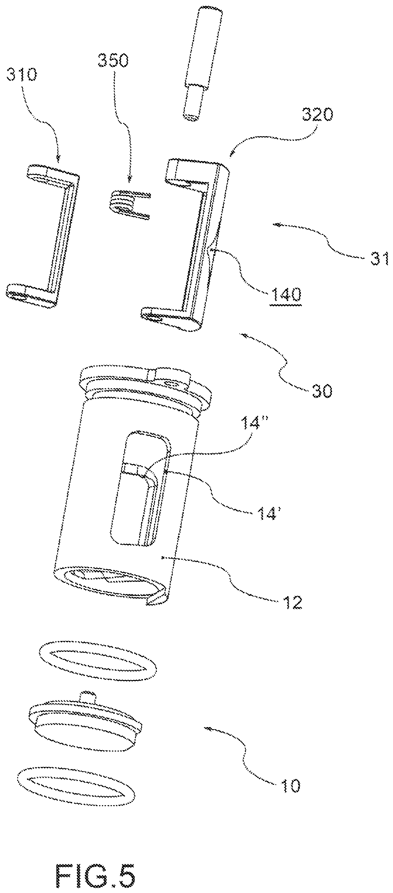

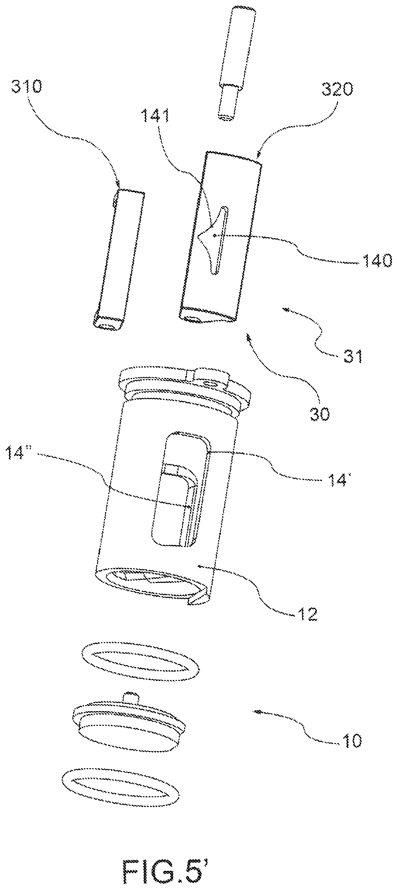

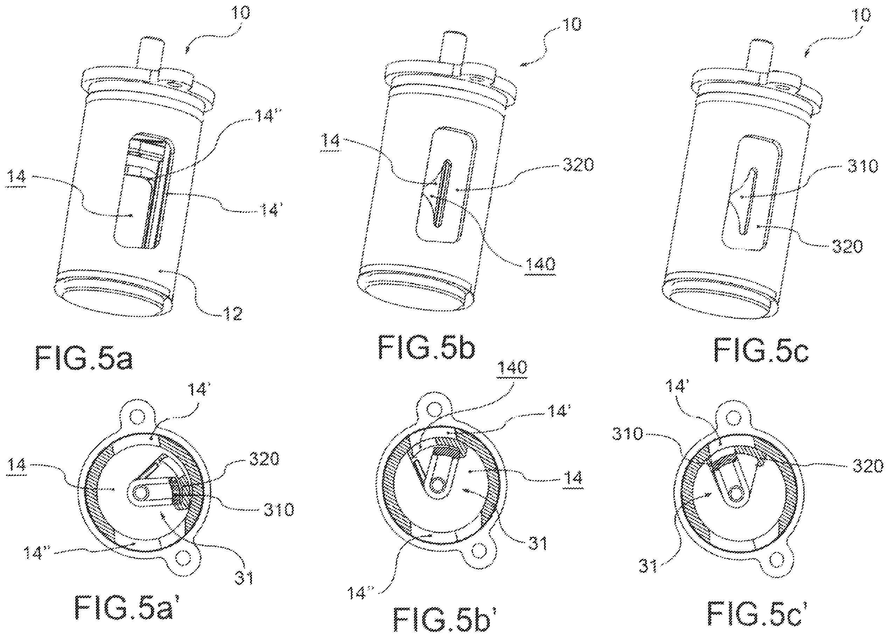

- Figures 5 and 5' show a view in separate parts of a valve assembly according to this invention;
- Figures 5a, 5b and 5c represent three perspective views of the valve assembly according to the embodiment referred to in Figure 5 and 5', respectively, an first open configuration, a second open configuration and a closed configuration;
- Figures 5a', 5b' and 5c' show three section views of the valve assembly shown in Figures 5a, 5b and 5c;

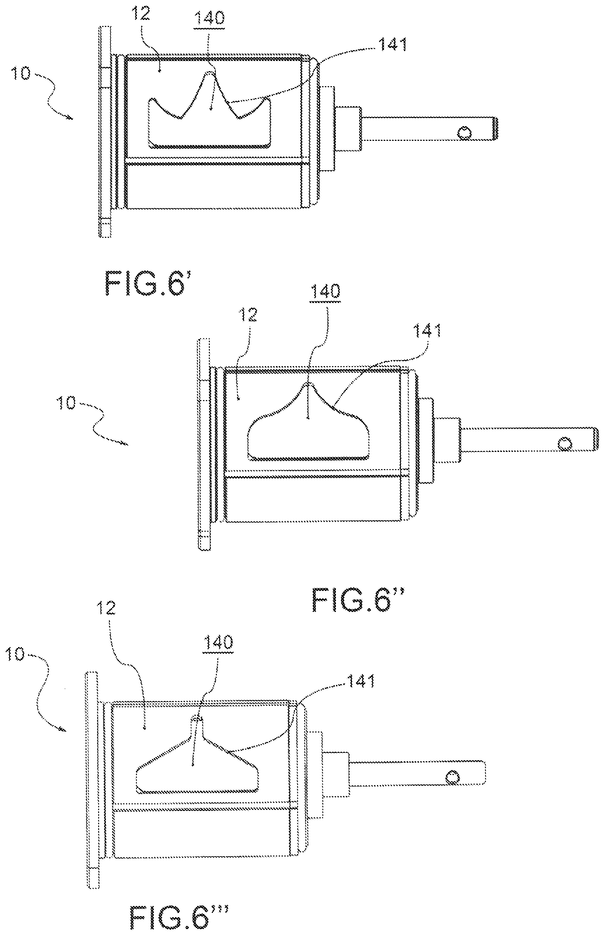

- Figures 6', 6" and 6''' illustrate three perspective views of the valve assembly according to three further aspects;

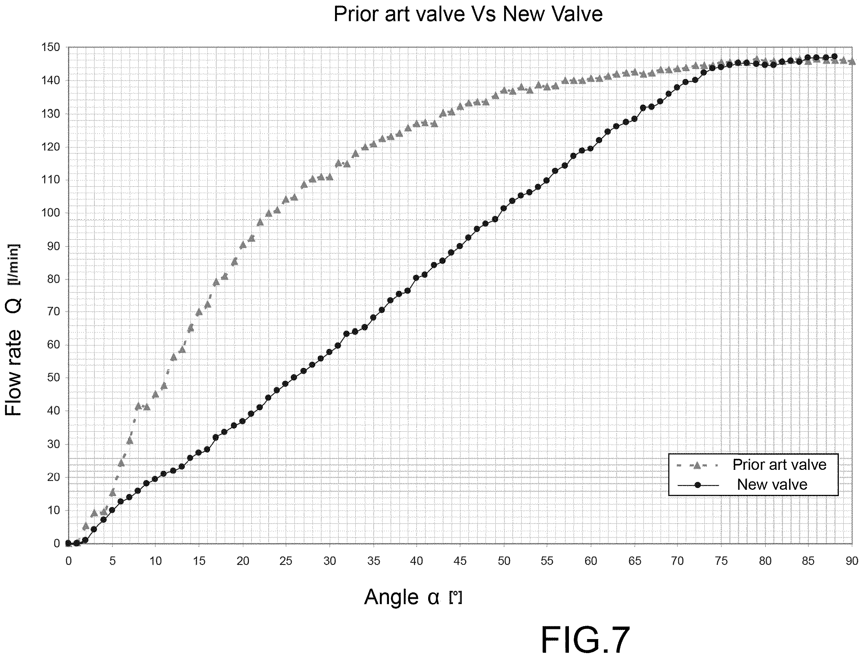

- Figure 7 is a diagram showing the trend of the ratio between the opening angle and flow rate of the cooling liquid relative, respectively, to an errbodi ment of the known art and an embodiment of the solution of this invention.

In this description, reference number 1 indicates a purrp of a cooling circuit, in particular for vehicles, corrpri si ng a purrp body 2 and an impeller 4 housed in the purrp body 2.

Preferably, the purrp 1 is mechanically actuated.

The purrp body 2 is connectable to the cooling circuit of the engine and, in particular, is connectable to a section of aspiration circuit, upstream from which the liquid is aspirated, and to a section of output circuit, downstream to which the liquid is fed towards the engine under pressure.

Downstream of the impeller, the purrp body 2 has at least one output channel 8. In some preferred embodiments, the purrp body 2 comprises a plurality of out put channels 8.

In a preferred embodiment, the purrp 1 comprises a valve assembly 10, object of the present invention, suitable to limit, on command, the passage of the cooling liquid in the output channel 8.

In particular, the valve assembly 10 of this invention, is suitable to be configured in an open configuration, in which it permits the passage of cooling liquid, and in a closed configuration, in which it obstructs the passage, cancelling the transit of cooling liquid, and a plurality of intermediate configurations in which the quantity of cooling liquid is partialised.

Preferably, the pump body 2 comprises a housing compartment 200 to downstream of the impeller 4 in which said valve assembly 10 is houseable.

In a preferred embodiment, the valve assembly 10 is insertable into said housing compartment 200 in a manner removable from it. According to a preferred embodiment, the valve assembly 10 has a cartridge structure, specifically to facilitate the operations of insertion and/or extraction of the valve assembly 10 in the pump body 2.

Preferably, the valve assembly 10 extends along an axis Y-Y. In addition, preferably, transversely to said axis Y-Y, the valve assembly 10 identifies a through duct 14 for the cooling liquid. In other words, the cooling liquid is forced by the presence of the valve assembly 10 to flow inside a passage delimited by the presence of the valve assembly 10 itself, i.e., the duct 14.

Preferably, the valve assembly 10 identifies, parallel to the axis Y-Y, a passage area 140 for the cooling liquid.

Preferably, moreover, the duct 14 is therefore suitable to identify an inlet mouth 14' and an outlet mouth 14", through which the cooling liquid, respectively, enters and exits the duct 14.

According to a preferred embodiment, the valve assembly 10 comprises a shutter 30 drivable in rotation.

Preferably, said shutter 30 comprises an operating member 31 rotatable in a manner offset with respect to said axis Y-Y between a closed position, an open position and a plurality of intermediate positions between these.

In other words, at each position of the operating member 31 corresponds to the respective above-mentioned configuration of the valve assembly 10. Therefore, in this description, "open" means a position of the operating member 31 in which the transit of the greatest possible quantity of cooling liquid is allowed; "closed" means a position of the operating member 31 in which no passage of cooling liquid is allowed; "intermediate" means a position of the operating member 31 in which the passage of a predefined quantity of cooling liquid is allowed.

According to a preferred embodiment, the operating member 31, as a function of its angle of rotation with respect to the axis Y-Y, cooperates with the passage area 140 in such a way as to form a passage opening 140'.

Preferably, the passage opening 140' identified is such as realise a ratio R opening angle α/cooling liquid flow rate Q having a predefined trend.

In a preferred embodiment, the ratio R opening angle α/flow of cooling liquid Q has a linear trend, as shown for example in a non-limiting manner in Figure 7.

In other words, the rotation of the shutter 30 results in an angular positioning of the operating member 31 such as to be suitable to cooperate with the passage area 140 in such a way as to limit the section of the duct 14 through which the cooling liquid transits towards the sole passage opening 140'.

Preferably, in the open configuration, i.e., with shutter 30 in the open position, the passage opening 140' corresponds to the passage area 140.

Preferably, the passage area 140 has a shape tapered towards the closed position of the operating member 31.

According to a preferred embodiment, the passage area 140 is delimited by a single window 141, suitably shaped. By way of example, the accompanying figures shown a plurality of shapes of the passage area 140, preferably, constituted by a single window 141, in which is shown a tapered trend of the same.

In further preferred embodiments (not shown in the accompanying figures), the passage area 140 is delimited by a plurality of specially shaped windows 141.

In other words, in a preferred embodiment, said passage opening 140' is identifiable with the inlet mouth 14' and/or the outlet mouth 14' of the duct 14. Therefore, preferably, in a preferred embodiment, the operating member 31 cooperates with said inlet mouth 14'.

According to a preferred embodiment, the valve assembly 10 comprises a valve body 12, preferably cylindrical, that extends in height, transversely containing the duct 14, herein inside the duct 14, operating member 31 is guided in rotation. In other words, in a preferred embodiment, the valve body 12 is suitable to contain the operating member 31. Preferably, on the valve body 12 is identified the inlet mouth 14' and the outlet mouth 14.

According to a preferred embodiment, the passage area 140 is formed on the valve body 12. Preferably, for example, said passage area 140 is delimited by the inlet mouth 14' and/or by the outlet mouth 14_.

According to the invention, the operating member 31 corrprises an active portion 310 and a passive portion 320, disposed with respect to the axis Y-Y of different radii, i.e., they are facing radially one with respect to the other.

The active portion 310 and the passive portion 320 are respectively drivable in rotation around the axis Y-Y. Moreover, according to a preferred embodiment, the active portion 310 is suitable to engage the passive portion 320 for example to drag it in rotation, preferably, in its passage between the open position and the closed position.

In further preferred embodiments, the operating member 31 comprises elastic means 350, for example a helical spring, suitable to engage the active portion 310 and the passive portion 320, for example, to maintain the active portion 310 in a predefined angular position with respect to the passive portion 320, for example, as described below, to maintain the active portion 310 in a portion of closure with respect to the passive portion 320.

In fact, according to a preferred embodiment, the passage area 140 is formed on said passive portion 320 and the passage opening 140' is identified in the rotation of the active portion 310 with respect to the passive portion 320.

In other words, the passive portion 320 is rotatable to be arranged transversely to the duct 14, placing the passage area 140 transversely to it, in such a way that said passage opening 140' is delimited as a function of the angle of rotation of the active portion 310.

This invention also covers a pump 1 of a cooling circuit of a vehicle having the characteristics described above, and also comprising a valve assembly 10 according to what was previously described.

Preferably, the pump 1 comprises an actuation device engaged with the shutter 30 comprising an electric motor suitable to continuously adjust the angular positioning of the shutter 30. Preferably, the actuation device comprises all the characteristics described and shown in document BS2015A000006. In further embodiments, the actuation device comprises a pneumatic and/or hydraulic actuator.

In addition, this invention also covers a pump 1 of a cooling circuit of a vehicle, comprising the aforementioned pump body 2 and an impeller 4; the latter, housed in the pump body 2, for the aspiration of cooling liquid and supplying, downstream, cooling liquid under pressure, comprising at least one output channel 8.

The pump 1 comprises an adjustment valve assembly placed transversally to the output channel 8, identifying, upstream, an inlet portion 8' and, downstream, an outlet portion 8", wherein the valve assembly comprises a shutter movable between a closed position, an opening position and a plurality of intermediate positions between these.

Preferably, the pump 1 of this invention has an output channel 8 that identifies, transversely to it, a passage area 140 specifically shaped in such a way that the shutter, as a function of its position, is available with respect to said passage area 140, identifying a passage opening 140'. Said passage opening 140' is such as to have a flow rate of cooling liquid with a predefined trend as a function of the movement of the shutter, wherein, in a preferred embodiment, said trend is linear.

In other words, the pump body 2, and in particular output channel 8, is shaped in such a way as to have a passage area 140 that, when engaged with the shutter, delimits a passage opening 140' such as to allow a regulation of the flow rate, which for example has a linear trend as a function of the position of the shutter. For example a solution of pump body 2 according to what is described above is shown in Figure 3b.

In a preferred embodiment, during design, the pump body 2 provides for said shape and is therefore produced directly comprising a shape of the output channel 8 suitable to identify the passage area 140.

According to a further preferred embodiment, the portion of output channel 8 that identifies the passage area 140 is instead composed by an insert insertable into the pump body 2 frontally to the valve assembly and suitable to operate with it.

Preferably, inside the pump body 2, the pump 1 comprises a housing compartment 200 that extends transversely to the output channel 8 between the inlet portion 8' and the outlet portion 8", in which the valve assembly is insertable in it in a removable manner.

According to a preferred embodiment, the shutter 30 is drivable in rotation, comprising an operating member 31 axially offset with respect to the axis Y-Y.

Preferably, the pump comprises an actuation device engaged with the shutter 30 and comprising an electric motor suitable to continuously adjust the positioning of the shutter 30. Preferably, the actuation device comprises all the characteristics described and shown in document BS2015A000006.

In further embodiments, the actuation device operating with the shutter 30 comprises a pneumatic and/or hydraulic actuator.

Preferably, each embodiment of the passage area 140 shown on the shutter 30 or on the valve body 12 in the accompanying figures is also reproducible on the pump body 2 according to what is described above.

Innovatively, the valve assembly object of the present invention, the cooling pump that contains it and the cooling pump object of the present invention, are particularly suitable for use as part of a cooling system of a vehicle, solving the problem of the known art mentioned above.

Advantageously, the flow rate of cooling liquid output is adjustable in a predefined manner, for example, in a linear manner, allowing precise and effective circulation of cooling liquid in the cooling circuit.

Advantageously, the liquid flow rate is adjusted by the design of the shape of the passage area and through its interaction with the shutter, in order to have a specially shaped passage opening, so as to allow regulating the flow of cooling liquid.

Moreover, advantageously, the pump unit exhibits a linear trend of the liquid flow rate as a function of the angular position of the shutter, and in particular when this is rotated through small angles of rotation starting from the closed position.

Preferably, the valve assembly comprises a shutter drivable in rotation and advantageously, the angular positioning of the shutter, for example by means of an electrical actuating device, allows a regulation of the flow of the cooling liquid, preferably, maintaining linear the ratio between the opening angle and flow rate of cooling liquid.

Advantageously, the valve assembly ensures a high seal, minimising, to zero, oozing phenomena and the undesired passage of cooling liquid inside it. All this is advantageously obtained with a shutter suitable to be moved in a simple and effective manner, improving both the useful life of the shutter itself and the means that move it.

According to a still further advantageous aspect, the valve assembly, and in particular the duct and the shutter assembly, have geometry and section such that the flow of the cooling liquid is facilitated, minimising losses of load.

Advantageously, in the embodiments that provide for the valve body, valve assemblies having the same valve body, but different shutters, are insertable interchangeably in the pump assembly according to the needs that may also occur in the course of the life cycle of the car or motorcycle. A further advantageous aspect of such embodiments is therefore to completely unleash the design of the pump, and in particular the housing cavity, from the specific needs of the shutter.

Advantageously, the pump is designed in such a way as to comprise the specific passage area that solves the problem by acting with a shutter of any shape.

A further advantageous aspect also lies in the fact that the pump body comprises an insert insertable into the output channel in which the passage area is created.

A still further advantageous aspect, lies in the fact that the management of the shutter position is simplified thanks to the regularity with which the cooling liquid flows through the variable passage openings. Advantageously, the hysteresis effects are less pronounced, thus allowing the use of less accurate sensors in the evaluation of the angle of rotation of the shutter.

Moreover, advantageously, the valve assembly, and the pump of this invention are particularly effective in the regulation of the cooling liquid in solutions in which, respectively, they cooperate with or comprise an actuation device that comprises all the characteristics described and shown in document BS2015A000006.

In further preferred embodiments, in the design of the passage area and in particular of its shape, on the side opposite to that with the tapering, the passage area is extremely large; advantageously, this solves the problem of any losses of load.

It is clear that one skilled in the art, in order to meet specific needs, may make changes to the valve assembly and pump described above, all contained within the scope of protection defined by the following claims.

## Claims

1. Valve assembly (10), housable in extractable way in a housing compartment (200) of a pump body (2) of a pump (1) of the cooling liquid of a vehicle, in a position downstream of an impeller (4) of said pump (1), wherein the valve assembly (10) extends along an axis (Y-Y) identifying transversely to it a through duct (14) and parallel to it a passage area (140) for the cooling liquid;
wherein the valve assembly (10) comprises a shutter (30) drivable in rotation and comprising an operating member (31) rotatable in a manner offset with respect to said axis (Y-Y) between a closed position and an open position;
wherein the passage area (140) has a shape tapered towards the closed position of the operating member (31) and that the operating member (31) is rotatable in a plurality of intermediate positions between the closed position and the open position, wherein as a function of its angle of rotation with respect to the axis (Y-Y) co-operates with the passage area (140) identifying a passage opening (140') through which flows the cooling liquid wherein the passage opening (140') is shaped by defining a ratio (R) opening angle (α)/cooling liquid flow rate (Q) with a linear trend;
the valve assembly (10) being **characterized by** the fact that the operating member (31) comprises an active portion (310) and a passive portion (320), disposed with respect to the axis (Y-Y) on different radii, namely radially facing each other, and are respectively guidable in rotation, wherein the passage area (140) is formed on said passive portion (320) and the passage opening (140') is identified in the rotation of the active portion (310) with respect to the passive portion (320).

2. Valve assembly (10) according to any of the previous claims, wherein the passage area (140) is delimited by a single window (141).

3. Valve assembly (10) according to any of the preceding claims, wherein the valve assembly (10) comprises a valve body (12), preferably cylindrical, that extends in height, transversely containing the duct (14) inside of which the operating member (31) is guided in rotation.

4. Valve assembly (10) according to any of the preceding claims, wherein the duct (14) has an inlet mouth (14') and an outlet mouth (14"), wherein the operating member (31) co-operates with said inlet mouth (14').

5. Pump (1) of a cooling circuit of a vehicle, comprising an impeller (4) and a pump body (2) containing the impeller (4), having a housing compartment (200) downstream of the impeller (4) and a valve assembly (10) according to any of the preceding claims.

6. Pump (1) according to claim 5, comprising an actuation device engaged with the shutter (30) comprising an electric motor suitable to continuously adjust the angular positioning of the shutter (30).

## Patentansprüche

1. Ventilanordnung (10), welche in einer herausnehmbaren Art und Weise in einem Gehäuseabteil (200) eines Pumpenkörpers (2) einer Pumpe (1) der Kühlflüssigkeit eines Fahrzeugs in einer Position stromabwärts eines Impellers (4) der Pumpe (1) aufnehmbar ist, wobei sich die Ventilanordnung (10) entlang einer Achse (Y-Y) erstreckt, welche transversal dazu einen Durchgangskanal (14) und parallel dazu einen Durchlassbereich (140) für die Kühlflüssigkeit identifiziert;
wobei die Ventilanordnung (10) einen Verschluss (30) umfasst, welcher in Rotation antreibbar ist und ein Betätigungselement (31) umfasst, welches in einer Art und Weise, welche in Bezug auf die Achse (Y-Y) versetzt ist, zwischen einer geschlossenen Position und einer offenen Position rotierbar ist;
wobei der Durchlassbereich (140) einen Form aufweist, welche in Richtung der geschlossenen Position des Betätigungselements (31) verjüngt ist, und das Betätigungselement (31) zwischen der geschlossenen Position und der offenen Position in eine Mehrzahl von Zwischenpositionen rotierbar ist, wobei es als eine Funktion seines Rotationswinkels in Bezug auf die Achse (Y-Y) mit dem Durchlassbereich (140) zusammenwirkt, welcher eine Durchlassöffnung (140') definiert, durch welche die Kühlflüssigkeit strömt, wobei die Durchlassöffnung (140') durch Definieren eines Verhältnisses (R) Öffnungswinkel (a) / Kühlflüssigkeit-Strömungsrate (Q) mit einem linearen Trend geformt ist;
wobei die Ventilanordnung (10) durch die Tatsache gekennzeichnet ist, dass das Betätigungselement (31) einen aktiven Abschnitt (310) und einen passiven Abschnitt (320) umfasst, welche in Bezug auf die Achse (Y-Y) an verschiedenen Radien, nämlich radial einander zugewandt, angeordnet sind und jeweils in Rotation führbar sind, wobei der Durchlassbereich (140) an dem passiven Abschnitt (320) ausgebildet ist und die Durchlassöffnung (140') in der Rotation des aktiven Abschnitts (310) in Bezug auf den passiven Abschnitt (320) identifiziert ist.

2. Ventilanordnung (10) nach einem der vorhergehenden Ansprüche, wobei der Durchlassbereich (140) durch ein einziges Fenster (141) begrenzt ist.

3. Ventilanordnung (10) nach einem der vorhergehenden Ansprüche, wobei die Ventilanordnung (10) einen, vorzugsweise zylindrischen, Ventilkörper (12) umfasst, welcher sich in einer Höhe erstreckt, wobei er transversal den Kanal (14) enthält, innerhalb welchem das Betätigungselement (31) in Rotation geführt ist.

4. Ventilanordnung (10) nach einem der vorhergehenden Ansprüche, wobei der Kanal (14) eine Einlass-Mündung (14') und eine Auslass-Mündung (14") aufweist, wobei das Betätigungselement (31) mit der Einlass-Mündung (14') zusammenwirkt.

5. Pumpe (1) eines Kühlkreislaufs eines Fahrzeugs, umfassend einen Impeller (4) und einen den Impeller (4) enthaltenden Pumpenkörper (2), welcher ein Gehäuseabteil (200) stromabwärts des Impellers (4) und eine Ventilanordnung (10) nach einem der vorhergehenden Ansprüche aufweist.

6. Pumpe (1) nach Anspruch 5, umfassend eine mit dem Verschluss (30) in Eingriff gebrachte Betätigungsvorrichtung, welche einen Elektromotor umfasst, welcher dazu geeignet ist, die Winkel-Positionierung des Verschlusses (30) kontinuierlich einzustellen.

## Revendications

1. Ensemble soupape (10), pouvant être logé de manière extractible dans un compartiment de logement (200) d'un corps de pompe (2) d'une pompe (1) du liquide de refroidissement d'un véhicule, dans une position en aval d'une turbine (4) de ladite pompe (1), dans lequel l'ensemble soupape (10) s'étend suivant un axe (Y-Y) identifiant transversalement à lui un conduit traversant (14) et parallèle à lui une zone de passage (140) pour le liquide de refroidissement ;
dans lequel l'ensemble soupape (10) comprend un obturateur (30) pouvant être entraîné en rotation et comprenant un organe fonctionnel (31) capable d'une rotation de manière décalée vis-à-vis dudit axe (Y-Y) entre une position fermée et une position ouverte;
dans lequel la zone de passage (140) a une forme effilée vers la position fermée de l'organe fonctionnel (31) et en ce que l'organe fonctionnel (31) est capable d'une rotation dans une pluralité de positions intermédiaires entre la position fermée et la position ouverte, dans lequel en fonction de son angle de rotation vis-à-vis de l'axe (Y-Y) coopère avec la zone de passage (140) identifiant une ouverture de passage (140') à travers laquelle s'écoule le liquide de refroidissement dans lequel l'ouverture de passage (140') est mise en forme par définition d'un rapport (R) angle d'ouverture (α)/débit de liquide de refroidissement (Q) avec une tendance linéaire ;
l'ensemble soupape (10) étant **caractérisé par le fait que** l'organe fonctionnel (31) comprend une portion active (310) et une portion passive (320), disposées vis-à-vis de l'axe (Y-Y) sur des rayons différents, à savoir face à face radialement, et peuvent respectivement être guidés en rotation, dans lequel la zone de passage (140) est formée sur ladite portion passive (320) et l'ouverture de passage (140') est identifiée dans la rotation de la portion active (310) vis-à-vis de la portion passive (320).

2. Ensemble soupape (10) selon l'une quelconque des revendications précédentes, dans lequel la zone de passage (140) est délimitée par une fenêtre unique (141).

3. Ensemble soupape (10) selon l'une quelconque des revendications précédentes, dans lequel l'ensemble soupape (10) comprend un corps de soupape (12), de préférence cylindrique, qui s'étend en hauteur, contenant transversalement le conduit (14) à l'intérieur duquel l'organe fonctionnel (31) est guidé en rotation.

4. Ensemble soupape (10), selon l'une quelconque des revendications précédentes, dans lequel le conduit (14) a une embouchure d'entrée (14') et une embouchure de sortie (14"), dans lequel l'organe fonctionnel (31) coopère avec ladite embouchure d'entrée (14').

5. Pompe (1) d'un circuit de refroidissement d'un véhicule, comprenant une turbine (4) et un corps de pompe (2) contenant la turbine (4), ayant un compartiment de logement (200) en aval de la turbine (4) et un ensemble soupape (10) selon l'une quelconque des revendications précédentes.

6. Pompe (1) selon la revendication 5, comprenant un dispositif d'actionnement engagé avec l'obturateur (30), comprenant un moteur électrique approprié pour régler en continu le positionnement angulaire de l'obturateur (30).
